# EUROPEAN PATENT SPECIFICATION

(11) **EP 0 714 942 B1**
(45) Date of publication and mention of the grant of the patent: **09.02.2000**
(21) Application number: 95307900.1
(22) Date of filing: 06.11.1995
(51) Int. Cl.: C08L 25/16, C08L 51/04, C08L 55/02

(54) **Impact modified alpha alkyl vinyl aromatic-vinyl cyanide composition**
Schlagzähmodifizierte Zusammensetzung auf Basis von Copolymeren aus Alpha-Alkyl substituierten aromatischen Vinyl und Vinylcyanid
Composition résistante aux chocs à base de copolymères d'un composé vinyle aromatique alpha-alcoyl substitué et de cyanure de vinyle

(30) Priority: 21.11.1994 US 342544
(43) Date of publication of application: 05.06.1996
(73) Proprietor: GENERAL ELECTRIC COMPANY, Schenectady, NY 12345 (US)
(72) Inventor: Kuruganti, Vijaya Kumar, Washington, West Virginia 26181 (US); Gaggar, Satish Kumar, Parkersburg, West Virginia 26101 (US); Burger, James Christopher, Parkersburg, West Virginia 26101 (US); Roettger, Louis George, Vienna, West Virginia 22180 (US)
(74) Representative: Szary, Anne Catherine, Dr.

(56) References cited:
- EP-A- 0 116 330
- EP-A- 0 160 974
- EP-A- 0 288 298
- CA-A- 1 318 737
- US-A- 4 713 420

## Description

The present invention relates to alpha alkyl vinyl aromatic-vinyl cyanide copolymer compositions, and more particularly relates to impact modified alpha alkyl vinyl aromatic-vinyl cyanide copolymer compositions.

### DESCRIPTION OF THE RELATED ART

Alpha alkyl vinyl aromatic-vinyl cyanide copolymers are known for their high heat deflection temperatures, but often are relatively brittle. Impact modification of such copolymers can be achieved by utilization of rubber modified graft copolymers, but such modification can undesirably provide a composition with a high viscosity, low gloss and less than desired levels of impact strength.

Consequently, there is a desire to provide an impact modified alpha alkyl vinyl aromatic-vinyl cyanide copolymer composition exhibiting a high level of gloss, an enhanced level of impact strength and a reduced level of viscosity compared to various other impact modified alpha-alkyl vinyl aromatic-vinyl cyanide copolymer compositions.

### Summary of the Invention

The present invention provides a thermoplastic composition comprising (a) a mass polymerized graft copolymer, (b) an alpha-alkyl substituted vinyl aromatic-vinyl cyanide copolymer and (c) an emulsion polymerized graft copolymer formed by reacting a vinyl aromatic monomer and a vinyl cyanide monomer in the presence of a redox initiator and a vinyl aromatic-diene rubber substrate. The composition exhibits reduced viscosity, enhanced impact strength, reduced opacity, high gloss and a high heat deflection temperature. The reduced opacity allows for reduced pigment loadings for a given color intensity, and the compositions are useful for making automotive parts such as distributor caps and instrument panels.

### Detailed Description of the Invention

The thermoplastic composition comprises (a) a mass polymerized graft copolymer comprising (i) a diene rubber substrate and (ii) a vinyl aromatic-vinyl cyanide superstrate, wherein the mass polymerized graft copolymer is preferably present in the composition at a level of from 10 to 50 percent by weight based on the total weight of the composition, preferably from 30 to 45 percent by weight thereof, and most preferably from 35 to 40 percent by weight thereof; (b) an alpha alkyl vinyl aromatic-vinyl cyanide copolymer present at a level of from 10 to 55 percent by weight based on the total weight of the composition, more preferably from 35 to 45 percent by weight thereof, and most preferably about 40 percent by weight thereof; and (c) an emulsion polymerized graft copolymer comprising (i) a small particle size, vinyl aromatic-diene rubber substrate and (ii) a vinyl aromatic-vinyl cyanide superstrate formed by polymerization of a vinyl aromatic monomer and a vinyl cyanide monomer in the presence of a redox initiator and a vinyl aromatic-diene rubber substrate, wherein the emulsion graft copolymer is preferably present at a level of from 10 to 40 percent by weight, based on the total weight of the composition, more preferably from 15 to 30 percent by weight thereof, and most preferably from 20 to 25 percent by weight thereof.

The mass polymerized graft copolymer may be made by any suitable mass polymerization process as are conventionally known, and may be made by the process set out in Sue et al., U.S.-A- 5 414 045 which describes a multistage bulk process which involves reacting in a plug flow grafting reactor a liquid feed composition comprising vinylidene aromatic monomer, unsaturated nitrile monomer and rubbery synthetic butadiene polymer to a point prior to phase inversion, reacting the first polymerization product therefrom in a continuous stirred tank reactor to yield a phase inverted second polymerization product which then can be further reacted in a finishing reactor, and then devolatilized to produce the desired final product. Continuous mass polymerization processes may also be used, and a mass polymerization process is set out in Carter, U.S.-A-3,903,202,

The mass polymerized graft copolymer comprises (1) a diene rubber substrate preferably present at a level of from 5 to 25 percent by weight based on the total weight of the mass polymerized graft copolymer, and more preferably present at a level of from 7 to 15 percent by weight thereof, and most preferably present at a level of from 10 to 12 percent by weight thereof; and (ii) a vinyl aromatic-diene superstrate preferably present at a level of from 75 to 95 percent by weight based on the total weight of the mass polymerized graft copolymer, more preferably at a level of from 85 to 93 percent by weight thereof, and most preferably present at a level of from 88 to 90 percent by weight thereof.

The diene rubber substrate of the mass polymerized graft copolymer is preferably a 1,3 butadiene substrate which may be a homopolymer or a copolymer containing up to 50 percent by weight of one or more comonomers. An example of such a copolymer is butadiene-styrene copolymers. The starting diene rubber must be soluble in a mixture of styrene and acrylonitrile monomers.

The vinyl aromatic-vinyl cyanide superstrate of the mass polymerized graft copolymer is a copolymer of a vinyl aromatic monomer such as styrene and a vinyl cyanide monomer such as acrylonitrile. Suitable vinyl aromatic monomers and vinyl cyanide monomers are set out below. Preferably the vinyl aromatic is present at a level of from 50 to 90 percent by weight based on the total weight of the superstrate, more preferably from 70 to 80 percent by weight thereof, and most preferably about 75 percent by weight thereof. Preferably the vinyl cyanide is present at a level of from 10 to 50 percent by weight based on the total weight of the superstrate, more preferably from 20 to 30 percent by weight thereof, and most preferably about 25 percent by weight thereof.

The alpha-alkyl substituted vinyl aromatic-vinyl cyanide copolymer preferably comprises (in reacted form as is well understood) the vinyl aromatic monomer at a level of from 60 to 80 percent by weight based on the total weight of the copolymer, more preferably from 65 to 75 percent by weight thereof, and most preferably about 70 percent by weight thereof. The vinyl cyanide monomer is preferably present at a level of from 20 to 40 percent by weight based on the total weight of the copolymer, more preferably from 25 to 35 percent by weight thereof, and most preferably about 30 percent by weight thereof. The copolymers may also contain 20 percent or less of an additional monomer such as non-substituted styrene, and is preferably free of such additional monomers, and is preferably free of acrylate monomers such as alkyl alka acrylate monomers such as methylmethacrylate.

The alpha-alkyl vinyl aromatic monomer is preferably an alpha C₁-C₄ alkyl vinyl aromatic monomer, and is more preferably an alpha-methyl vinyl aromatic monomer, and is most preferably alpha-methylstyrene.

The emulsion polymerized graft copolymer comprises (i) a vinyl aromatic-diene rubber substrate present at a level of from 40 to 75 percent by weight based on the total weight of the emulsion polymerized graft copolymer, more preferably from 50 to 70 percent by weight thereof, and most preferably from 55 to 65 percent by weight thereof, wherein the substrate preferably has a weight average particle size of between 0.12 µm (microns) and 0.20 µm (microns), more preferably from 0.12 µm (microns) and 0.17 µm (microns), and most preferably from 0.13 µm (microns) and 0.15 µm (microns), and (ii) a vinyl aromatic-vinyl cyanide superstrate present at a level of from 25 to 60 percent by weight based on the total weight of the emulsion polymerized graft copolymer, more preferably from 30 to 50 percent by weight thereof, and most preferably from 35 to 45 percent by weight thereof.

The vinyl aromatic-diene rubber substrate of the emulsion polymerized graft copolymer preferably comprises the vinyl aromatic at a level of from 5 to 25 percent by weight based on the total weight of the substrate, more preferably from 10 to 20 percent by weight thereof, and most preferably from 12 to 17 percent by weight thereof, and preferably comprises the diene at a level of from 75 to 95 percent by weight based on the total weight of the substrate, more preferably from 80 to 90 percent by weight thereof, and most preferably from 83 to 88 percent by weight thereof.

The superstrate of the emulsion polymerized graft copolymer is formed by reacting the vinyl aromatic monomer and vinyl cyanide monomer in the presence of a redox (oxidation-reduction) initiator and the vinyl aromatic-diene rubber substrate in latex form. The superstrate of the emulsion polymerized graft copolymer preferably comprises the vinyl aromatic monomer at a level of from 50 to 90 percent by weight based on the total weight of the superstrate, more preferably from 70 to 80 percent by weight thereof, and most preferably about 75 percent by weight thereof; and preferably comprises the vinyl cyanide monomer at a level of from 10 to 50 percent by weight based on the total weight of the superstrate, more preferably from 20 to 30 percent by weight thereof, and most preferably about 25 percent by weight thereof.

Suitable redox initiators include di-tert-butyl peroxide, benzoyl peroxide, lauroyl peroxide, oleyl peroxide, toluyl peroxide, di-tert-butyl diperphthalate, tert-butyl peracetate, tert-butyl perbenzoate, dicumyl peroxide, tert-butyl peroxide, isopropyl carbonate, 2,5-dimethyl-2,5-dimethyl-2,5-di(tert-butylperoxy) hexane, 2,5-dimethyl-2,5-di(tert-butylperoxy) hexane-3 or hexyne-3, tert-butyl hydroperoxide, cumene hydroperoxide, p-menthane hydroperoxide, cyclopentane hydroperoxide, pinane hydroperoxide, 2,5-dimethylhexane-2,5-dihydroperoxide and mixtures thereof. The redox initiator results in good graft coverage, thereby preventing rubber agglomeration during melt mixing.

The vinyl aromatic monomers which may be employed for the emulsion polymerized graft copolymer include styrene, alpha-methyl styrene, halostyrenes i.e. dibromostyrene, mono or di alkyl, alkoxy or hydroxy substitute groups on the nuclear ring of the vinyl aromatic monomer i.e. vinyl toluene, vinylxylene, butylstyrene, para-hydroxystyrene or methoxystyrene or mixtures thereof. The vinyl aromatic monomers utilized are generically described by the following formula: 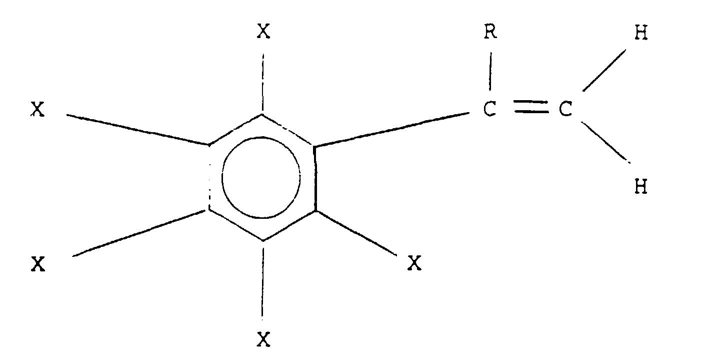 wherein X is selected from the group consisting of hydrogen, alkyl groups of 1 to 5 carbon atoms, cycloalkyl, aryl, alkaryl, aralkyl, alkoxy, aryloxy, and halogens. R is selected from the group consisting of hydrogen, alkyl groups of 1 to 5 carbon atoms and halogens such as bromine and chlorine. Examples of substituted vinylaromatic compounds include styrene, 4-methylstyrene, 3,5-diethylstyrene, 4-n-propylstyrene, α-methylstyrene, α-methyl vinyltoluene, α-chlorostyrene, α-bromostyrene, dichlorostyrene, dibromostyrene, tetrachlorostyrene, and mixtures thereof. The preferred vinyl aromatic monomers used are styrene and/or α-methylstyrene.

Suitable vinyl cyanide monomers include acrylonitrile and substituted vinyl cyanides such as methacrylonitrile. The acrylonitrile and substituted acrylonitrile are described generically by the following formula: 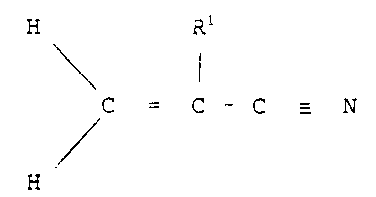 wherein R¹ may be selected from the same group set out for R as previously defined. Examples of such monomers include acrylonitrile, ethacrylonitrile, methacrylonitrile, α-chloroacrylonitrile, and α-bromoacrylonitrile.

Specific conjugated diene monomers normally utilized in preparing the rubber substrate of the graft polymer are generically described by the following formula: 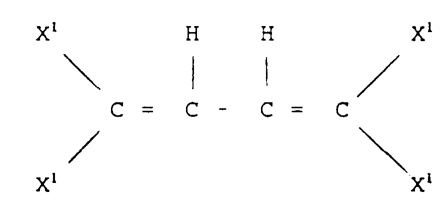 wherein X¹ is selected from the group consisting of hydrogen, alkyl groups containing from one to five carbon atoms, chlorine or bromine. Examples of dienes that may be used are butadiene, isoprene, 1,3-heptadiene, methyl-1,3-pentadiene, 2,3-dimethylbutadiene, 2-ethyl-1,3-pentadiene 1,3- and 2,4-hexadienes, chloro and bromo substituted butadienes such as dichlorobutadiene, bromobutadiene, dibromobutadiene and mixtures thereof. A preferred conjugated diene is 1,3 butadiene.

Preferred graft superstrates include copolymers of styrene and acrylonitrile, copolymers of α-methylstyrene and acrylonitrile or copolymers with up to 50% by weight of C₁-C₆ alkylacrylates, acrylonitrile or styrene. Specific examples of monovinylidene aromatic graft copolymers include but are not limited to the following: acrylonitrile-butadiene-styrene (ABS), and methylmethacrylate-acrylonitrile-butadiene-styrene (MABS). Preferably the superstrate is free of alkylacrylates such as methylmethacrylates.

The compositions preferably exhibit an opacity of not greater than 81 percent, a gloss of at least 90 percent (60° surface gloss, ASTM D523), and a Capillary viscosity of less than 210 Pa.s (2100 poise) at 260°C, 1000/sec. as measured by ASTM D3835.

The thermoplastic compositions are useful for making high heat molded articles such as automotive parts such as interior trim, and preferably contain from 0.05 to 10 percent by weight pigments, more preferably from 0.1 to 5 percent by weight pigments, such as organic pigments, based on the total weight of the composition. The reduced opacity of the present compositions allows for the ability of reduced levels of pigment loading to achieve the desired level of color intensity thereby reducing the potential expense of higher pigment loadings.

### EXAMPLES

The ABS polyblends of the present invention comprise a matrix copolymer of alpha-methylstyrene and acrylonitrile blended with a mass polymerized acrylonitrile-butadiene-styrene graft copolymer (Bulk ABS) and an emulsion polymerized acrylonitrile-butadiene-styrene graft copolymer containing high rubber content (HRG). The polyblends were melt mixed in a 30 mm twin screw extruder at a temperature sufficient to melt all the components and in the proportions described in Table 1. The resulting pellets were injection molded into test specimens at a stock temp. of 246°C and mold temp. of 66°C. Viscosities of pellets were measured by Capillary rheometer at 260°C (500°F) according to ASTM D3835. Notched izod testing was carried out according to ASTM D256. Dart impact testing was done according to ASTM D3039. Heat deflection temperature (HDT) was measured according to ASTM D648-82. The surface gloss was measured by Gardner gloss meter according to ASTM D523. Opacity of the blends is measured on a 25D Hunter Colorimeter and expressed as percent. Yellowness Index was measured on a 25D Hunter Colorimeter according to ASTM E313.

The Emulsion HRG-1 is produced by carrying out graft polymerization on small particles (Mean particle size of 0.085 µm (microns)) of butadiene-styrene (85/15) with styrene and acrylonitrile using a thermal vazo initiator. The small particle butadiene-styrene rubber was produced by emulsion polymerization of butadiene and styrene using potassium persulfate thermal initiator. The small rubber particles in HRG-1 aggregate during melt mixing and molding of ABS polyblend.

The Emulsion HRG-2 is produced by grafting on to small particles (Mean particle size of 0.135 µm (microns)) of butadiene-styrene rubber (85/15) with styrene and acrylonitrile monomers using a redox initiator system. The small particle rubber substrate was produced by emulsion polymerization of butadiene and styrene using a thermal vazo initiator. The use of vazo initiator in polymerization yields a rubber with lower cross link density than when a persulfate based thermal initiator is used. Said redox initiated free radical graft polymerization results in a good graft coverage around the rubber particles in the HRG. Such a good graft coverage prevents the aggregation of small rubber particles of emulsion HRG in the matrix copolymer during melt mixing and molding. All HRG (HRG-1 and HRG-2) contains 50 percent rubber.

SAN is a copolymer of styrene-acrylonitrile (75/25 by weight) produced in mass polymerization. Weight average molecular weight (Mw) of -SAN is 118,000 and the weight average molecular weight (Mn) is 43,000.

Bulk ABS is a mass polymerized graft copolymer of acrylonitrile-butadiene-styrene. Weight ratio of acrylonitrile-butadiene-styrene in bulk ABS is 22/11/67. Rubber particle size range in Bulk ABS varies from 0.5 to 1.5 µm (microns).

AMSAN is a copolymer of alpha-methylstyrene and acrylonitrile (70/30) and commercially available from BASF.

EBS Wax (N,N' -ethylene bis(stearamide)) is a commercially available lubricant and is present in examples A, 1 and 2 at a level of 1 percent by weight.

Pluronic F-88 is a commercially available block copolymer of ethylene oxide and propylene oxide and typically used as a release agent and is present in examples A, 1 and 2 at a level of 0.25 percent by weight.

**TABLE 1**

| | A* | 1 | 2 | B* |
|---|---|---|---|---|
| Bulk ABS | - | 35 | 40 | 100 |
| AMSAN | 45 | 40 | 40 | - |
| SAN | 20 | - | - | - |
| HRG-1 | 35 | - | - | - |
| HRG-2 | - | 25 | 20 | - |
| Capillary Viscosity 260° (poise) 10⁻¹Pa.s 1000/sec Shear | 2246 | 2068 | 1927 | 1657 |
| 3.18mm (1/8") N.I. Impact RT (ft-lb/in) J/m | (4.7)250.5 | (7.4)394.4 | (5.4)287.8 | (2.8)149.2 |
| Dart Impact RT (ft-lb) Nm | (28)38 | (34)46 | (36)49 | (39)53 |
| Std. Dev. | 6 | 3 | 5 | 1 |
| HDT 3.18mm (1/8"), IMU (455kPa) (66 psi) (°C) | 99 | 99 | 96 | 91 |
| 60° Gloss | 88 | 91 | 91 | 76 |
| 3.18mm (1/8") Opacity (%) | 83 | 80 | 79 | 72 |
| Yellowness Index | 24 | 26 | 26 | 18 |

| | | | | |
|---|---|---|---|---|
| *comparative examples | | | | |

Formulation B (Bulk ABS) exhibits poor heat resistance and izod impact resistance compared to formulations A, 1 and 2.

Formulations 1 and 2 exhibit superior impact resistance (both izod and dart), lower viscosity, lower opacity values, compared to formulation A without comprising excellent heat resistance exhibited by formulation A.

## Claims

1. A thermoplastic composition comprising:
(a) a mass polymerized graft copolymer comprising
(i) a diene rubber substrate; and
(ii) a vinyl aromatic-vinyl cyanide superstrate, said diene rubber substrate being present at a level of from 5 to 25 percent by weight based on the total weight of the mass polymerized graft copolymer, said mass polymerized graft copolymer being present at a level of from 10 to 50 percent by weight based on the total weight of the composition;
(b) an alpha alkyl substituted vinyl aromatic-vinyl cyanide copolymer present at a level of from 10 to 55 percent by weight based on the total weight of the composition; and
(c) an emulsion polymerized graft copolymer comprising
(i) a vinyl aromatic-diene rubber substrate present at a level of from 40 to 75 percent by weight based on the total weight of the emulsion polymerized graft copolymer, said substrate having a weight average particle size of between 0.12µm (microns) and 0.20µm (microns);
(ii) a vinyl aromatic-vinyl cyanide superstrate present at a level of from 25 to 60 percent by weight based on the total weight of the emulsion polymerized graft copolymer, said superstrate being formed by reacting a vinyl aromatic monomer and a vinyl cyanide monomer in the presence of a redox initiator and said vinyl aromatic-diene rubber substrate, said emulsion graft copolymer being present at a level of from 10 to 40 percent by weight based on the total weight of the composition.

2. The composition of Claim 1 wherein said composition consists essentially of (a), (b) and (c) .

3. The composition of Claim 1 wherein said composition consists of (a), (b) and (c).

4. The composition of Claim 1 wherein said composition has an opacity of not greater than 81 percent.

5. The composition of Claim 1 wherein said composition has a 60° surface gloss of at least 90 as measured by ASTM D523.

6. The composition of Claim 5 wherein said composition has a Capillary Viscosity as measured at 260°C, 1000/sec. by ASTM D3835 of less than 210Pa.s (2100 poise).

7. The composition of Claim 1 wherein mass polymerized graft copolymer is present at a level of from 30 to 45 percent by weight based on the total weight of the composition.

8. The composition of Claim 1 wherein said alpha alkyl substituted vinyl aromatic-vinyl cyanide copolymer is an alpha-methylstyrene-acrylonitrile copolymer comprising from 60 to 80 percent by weight alpha-methylstyrene based on the total weight of the copolymer.

9. The composition of Claim 8 wherein said alphamethylstyrene-acrylonitrile copolymer is present at a level of from 20 to 40 percent by weight based on the total weight of the composition.

10. The composition of Claim 1 wherein said emulsion graft copolymer is present at a level of from 15 to 30 percent by weight based on the total weight of the composition.

## Patentansprüche

1. Thermoplastische Zusammensetzung, umfassend:
(a) ein in der Masse polymerisiertes Pfropfcopolymer, umfassend
(i) ein Dienkautschuk-Substrat und
(ii) ein darüberliegendes Substrat aus aromatischem Vinyl-Vinylcyanid, wobei das Dienkautschuk-Substrat in einer Menge von 5 bis 25 Gew.-%, bezogen auf das Gesamtgewicht des in der Masse polymerisierten Pfropfcopolymers vorhanden ist, das in der Masse polymerisierte Pfropfcopolymer in einer Menge von 10 bis 50 Gew.-%, bezogen auf das Gesamtgewicht der Zusammensetzung vorhanden ist;
(b) ein α-alkyl-substituiertes aromatisches Vinyl-Vinylcyanid-Copolymer in einer Menge von 10 bis 55 Gew.-%, bezogen auf das Gesamtgewicht der Zusammensetzung und
(c) ein emulsions-polymerisiertes Pfropfcopolymer, umfassend
(i) ein aromatisches Vinyl-Dienkautschuk-Substrat, das in einer Menge von 40 bis 75 Gew.-%, bezogen auf das Gesamtgewicht des emulsions-polymerisierten Pfropfcopolymers vorhanden ist, wobei das Substrat ein Gewichtsmittel der Teilchengröße zwischen 0,12 µm und 0,20 µm aufweist,
(ii) ein darüberliegendes aromatisches Vinyl-Vinylcyanid-Substrat, das in einer Menge von 25 bis 60 Gew.-%, bezogen auf das Gesamtgewicht des emulsionspolymerisierten Pfropfcopolymers vorhanden ist, wobei das darüberliegende Substrat gebildet ist durch Umsetzen eines aromatischen Vinylmonomers und eines Vinylcyanid-Monomers in Gegenwart eines Redox-Initiators und des aromatischen Vinyl-Dienkautschuk-Substrates, wobei das Emulsions-Pfropfcopolymer in einer Menge von 10 bis 40 Gew.-%, bezogen auf das Gesamtgewicht der Zusammensetzung, vorhanden ist.

2. Zusammensetzung nach Anspruch 1, worin die Zusammensetzung im wesentlichen aus (a), (b) und (c) besteht.

3. Zusammensetzung nach Anspruch 1, worin die Zusammensetzung aus (a), (b) und (c) besteht.

4. Zusammensetzung nach Anspruch 1, worin die Zusammensetzung eine Opazizität von nicht mehr als 81% aufweist.

5. Zusammensetzung nach Anspruch 1, worin die Zusammensetzung einen 60°-Oberflächenglanz von mindestens 90 aufweist, gemessen nach ASTM D523.

6. Zusammensetzung nach Anspruch 5, worin die Zusammensetzung eine Kapillar-Viskosität, gemessen bei 260°C, 1000/s nach ASTM D3835, von weniger als 210 Pa·s (2.100 poise) aufweist.

7. Zusammensetzung nach Anspruch 1, worin das in der Masse polymerisierte Pfropfcopolymer in einer Menge von 30 bis 45 Gew.-%, bezogen auf das Gesamtgewicht der Zusammensetzung, vorhanden ist.

8. Zusammensetzung nach Anspruch 1, worin das α-alkyl-substituierte aromatische Vinyl-Vinylcyanid-Copolymer ein α-Methylstyrol-Acrylnitril-Copolymer ist, das von 60 bis 80 Gew.-% α-Methylstyrol, bezogen auf das Gesamtgewicht des Copolymers, umfaßt.

9. Zusammensetzung nach Anspruch 8, worin das α-Methylstyrol-Acrylnitril-Copolymer in einer Menge von 20 bis 40 Gew.-%, bezogen auf das Gesamtgewicht der Zusammensetzung, vorhanden ist.

10. Zusammensetzung nach Anspruch 1, worin das Emulsions-Pfropfcopolymer in einer Menge von 15 bis 30 Gew.-%, bezogen auf das Gesamtgewicht der Zusammensetzung, vorhanden ist.

## Revendications

1. Composition thermoplastique comprenant :
(a) un copolymère de greffage polymérisé en masse comprenant :
(i) un support en caoutchouc diénique ; et
(ii) une couche supérieure en monomère vinyl-aromatique/cyanure de vinyle, ledit support en caoutchouc diénique étant présent en une quantité allant de 5 à 25 % en poids par rapport au poids total du copolymère de greffage polymérisé en masse, ledit copolymère de greffage polymérisé en masse étant présent en une quantité allant de 10 à 50 % en poids par rapport au poids total de la composition ;
(b) un copolymère monomère vinyl-aromatique α-alkylé/cyanure de vinyle, présent en une quantité allant de 10 à 55 % en poids par rapport au poids total de la composition ; et
(c) un copolymère de greffage polymérisé en émulsion comprenant :
(i) un support en caoutchouc monomère vinyl-aromatique/diène présent en une quantité allant de 40 à 75 % en poids par rapport au poids total du copolymère de greffage polymérisé en émulsion, ledit support présentant une taille de particules moyenne en poids de 0,12 µm à 0,20 µm ;
(ii) une couche supérieure en monomère vinyl-aromatique/cyanure de vinyle présente en une quantité allant de 25 à 60 % en poids par rapport au poids total du copolymère de greffage polymérisé en émulsion, ladite couche supérieure étant formée en faisant réagir un monomère vinyl-aromatique et un cyanure de vinyle monomère en présence d'un amorceur d'oxydo-réduction et dudit support en caoutchouc monomère vinyl-aromatique/diène, ledit copolymère de greffage polymérisé en émulsion étant présent en une quantité allant de 10 à 40 % en poids par rapport au poids total de la composition.

2. Composition selon la revendication 1, ladite composition comprenant essentiellement (a), (b) et (c).

3. Composition selon la revendication 1, ladite composition étant constituée de (a), de (b) et de (c).

4. Composition selon la revendication 1, ladite composition présentant une opacité qui n'est pas supérieure à 81 %.

5. Composition selon la revendication 1, ladite composition présentant une brillance de surface à 60° d'au moins 90, telle que mesurée selon la norme ASTM D523.

6. Composition selon la revendication 5, ladite composition présentant une viscosité telle que mesurée avec un viscosimètre capillaire à 260 °C, 1000/seconde, selon la norme ASTM D3835, inférieure à 210 Pa.s (2 100 poise).

7. Composition selon la revendication 1, dans laquelle le copolymère de greffage polymérisé en masse est présent en une quantité allant de 30 à 45 % en poids, par rapport au poids total de la composition.

8. Composition selon la revendication 1, dans laquelle ledit copolymère monomère vinyl-aromatique α-alkylé/cyanure de vinyle est un copolymère α-méthylstyrène/acrylonitrile comprenant de 60 à 80 % en poids de α-méthylstyrène par rapport au poids total du copolymère.

9. Composition selon la revendication 8, dans laquelle ledit copolymère α-méthylstyrène/acrylonitrile est présent en une quantité allant de 20 à 40 % en poids par rapport au poids total de la composition.

10. Composition selon la revendication 1, dans laquelle ledit copolymère de greffage polymérisé en émulsion est présent en une quantité allant de 15 à 30 % en poids par rapport au poids de la composition.
